# EUROPEAN PATENT SPECIFICATION

(11) **EP 1 969 076 B1**
(45) Date of publication and mention of the grant of the patent: **30.03.2011**
(21) Application number: 06848999.6
(22) Date of filing: 21.12.2006
(51) Int. Cl.: C09J 5/02, B29C 65/00

(54) **METHOD FOR IMPROVING GLASS BOND ADHESION**
VERFAHREN ZUR VERBESSERUNG DER GLASHAFTUNG
PROCÉDÉ AMÉLIORANT L ADHÉRENCE POUR COLLAGE DU VERRE

(30) Priority: 30.12.2005 US 755225 P
(43) Date of publication of application: 17.09.2008
(73) Proprietor: DOW GLOBAL TECHNOLOGIES INC., Midland MI 48674 (US)
(72) Inventor: MAHDI, Syed, Z., Rochester Hills, MI 48307 (US); ALLAM, Dominic, Joseph, Canton, MI 48188 (US); SEVIDAL-MARTE, Susan, A., Sterling Heights, MI 48310 (US)
(74) Representative: Raynor, John
(86) International application number: PCT/US2006/062498
(87) International publication number: WO 2007/079366

(56) References cited:
- DE-A1- 2 657 901
- US-A- 5 256 355
- US-A- 5 527 621
- US-B1- 6 348 123

## Description

### CLAIM OF PRIORITY

This application claims the benefit of U.S. Provisional Application No. 60/755,225; filed 12/30/2005.

### FIELD OF THE INVENTION

The present invention comprises a method for improving the adhesion between glass and a substrate.

### BACKGROUND OF THE INVENTION

There continues to be a need in the industry to improve the adhesion between two components using an adhesive, particularly between glass and a substrate (e.g. in vehicle windows). Reaction injection molding (RIM) procedures may be used to create substrates which may then be bonded to glass. Matsuura US 5,527,621 discloses a method of preparing a substrate for bonding, said method comprising the steps of (a) applying a cleanser consisting of a hydroxide and an alcohol to a surface of a thermoplastic polyimide moded article, (b) applying a silane primer to the surface, and (c) drying the surface. One draw back of RIM procedures is the need for mold release agents, such as external mold release agents, to insure the proper separation of the workpiece from the mold. Mold release agents tend to interfere with the ability of the adhesives and/or primers used in the bonding of the substrate to the glass.

### SUMMARY OF THE INVENTION

The present invention relates to methods of preparing a substrate for bonding that includes applying a cleanser to a reaction injection molded component. The substrate is dried to remove some or all of the liquid of the cleanser. The invention also relates to methods of bonding two substrates together. After cleaning the surface of one substrate with a basic solution, a primer may be applied to the cleaned surface or to a second substrate. An adhesive is then used to join the substrates together. In a first aspect of the present invention, there is provided a method of preparing a substrate for bonding, comprising contacting a reaction injection molded article having an external mold release agent thereon with a cleanser that consists essentially of a solution of between 0.5 wt % and 5 wt % of hydroxide in isopropanol and drying the surface of the reaction injection molded article by removing at least a portion of the cleanser therefrom, wherein the drying step commences within a minute of the completion of the application step. In a second aspect of the present invention, there is provided a method of bonding two substrates, comprising cleaning a surface of a first substrate with a basic solution consisting essentially of at least one hydroxide and at least one alcohol, wherein the first substrate is a reaction injection molded component comprising a mold release agent, applying a primer to the cleaned surface or to a second substrate, wherein the second substrate comprises a transparent glass panel and joining the first substrate and the second substrate with an adhesive.

### DETAILED DESCRIPTION

The present invention includes methods of preparing a first component for bonding with a second component. The method comprises applying a cleanser to the first component where the cleanser is a relatively basic composition (e.g. having a pH of 7 or greater).

The cleanser comprises a base and a solvent for the base. Suitable bases include alkali metal hydroxides, ammonium hydroxide, other bases, and combinations thereof, with potassium hydroxide and sodium hydroxide being preferred. According to the present invention, the solvent is an alcohol. Solvents that have a low vapor pressures are preferred, as low vapor pressure solvents ease the removal of the solvent. Alcohols such as methanol, propanol or butanol are preferred solvents. One particularly preferred solvent is isopropanol (IPA). Of course, combinations of the materials may be used as the solvent, such as methanol and isopropanol.

Preferred cleanser compositions include potassium hydroxide in isopropanol. The amount of base in the solvent may be up to the solubility limit of base in the solvent, with amounts of less than about 10.0 wt % of base in the solvent being preferred. A range of about 0.5 wt % to about 5.0 wt % of base in the solvent (e.g. about 1.5 wt %) is most preferred.

In addition, the cleanser may include a colorant or a fluorescing agent that may be used to help identify under ultraviolet light or other light source where the cleanser has been applied and whether the cleanser has been sufficiently removed.

The application of the cleanser may be accomplished using a suitable coating technique, such as swabbing, brushing, dipping, doctor blading, curtain coating, rolling or the like. In one embodiment, the cleanser may be sprayed on the first component. Another specific approach includes a step of wiping the first component with an applicator (e.g. a porous member such a cloth, a pad, a towelette, a wipe, a sponge or the like) that is loaded with the cleanser.

The method may also include drying the substrate. Drying the substrate may be accomplished by removing some or all of the cleanser, the solvent in the cleanser, or both, such as through the use of a contact step (e.g. a second wiping step) that employs an applicator such as a cloth, a pad, a towelette, a squeegee, a wipe, a sponge or the like. In one embodiment, a first portion of the applicator is used to apply the cleanser and a second portion of the applicator is used to dry the substrate. Alternatively, a non-contact step may be used such as evaporation by convective heat, radiant heat or both. In addition, or in the alternative, reduced pressure may be used to facilitate removal of the solvent so as to dry the substrate.

The time between application of the cleanser and drying may range from less than a second to several minutes (e.g. 30 minutes or more). For example, the steps may be carried immediately one after the other with no appreciable time between the steps. Alternately, a noticeable time period may exist between the completion of one step and the start of the other step. In one embodiment, the drying step commences within a minute of the completion of the application step.

In a preferred embodiment, the method comprises wiping on the cleanser with an applicator and wiping off the cleanser with an applicator, whether the applicator is the same or different between the two wiping steps.

The first component may be made of any suitable material, including plastics, composites (e.g. a fiber or particle reinforced material, a laminate or otherwise), combinations thereof or the like. Suitable plastics include thermoplastics, elastomeric thermoplastics (e.g. polyvinyl chloride or thermoplastic polyurethane), or combinations thereof. Reinforced, unreinforced, filled and unfilled plastics may also be used for the component. The first component may take any suitable form for use in the desired application such a sheet, a film, a panel, a block, a molded article, a shaped article or the like. The material of the first component may include a pigment to obtain the desired color; alternately, the first component may include a colored coating such as paint.

The first component is manufactured using a reaction injection molding (RIM) technique. More preferably, the material of the first component comprises an elastomeric material that results from a RIM technique. For example, combinations of isocyanate prepolymer and polyol or amine ethers may be useful as well as other components useful to create polyurethanes or polyureas. Materials commercially available from Bayer Material Science include those sold under the tradenames Baydur®, Prism®, Bayflex®, Bayfit® and Baytec®. As well, materials provided by Recticel are also suitable. One or more mold release agents may be incorporated into the material to facilitate the separation of the component from the mold. Alternately, external mold releases may be used (e.g. those applied to the mold before the RIM technique takes place). Any suitable mold release may be used, such as silicone based agents, zinc stearates containing agents, or the like, including those provided by Chem-Trend, Howell, MI.

The second component may be the same material as the first component. Otherwise, the second component may be made of any suitable material, including glass and transparent or translucent plastics such as (meth)acrylates or polycarbonates. Preferably, the second component is glass, and particularly tempered glass. Further, the material may contain one or more additives such as a tint, a colorant, scratch resistors, UV & heat absorbers, adhesion promoters or any combination thereof. The second component may be coated with one or more coatings, such as a tint, a hard-coating, a polarizing coating, a scratch resistant coating, a chemical resistant coating, a reflective coating, a radiation absorbing coating (e.g. a UV coating), or any combination thereof, or the like.

In one embodiment, the surfaces of each of the components may optionally undergo a preliminary treatment prior to the application of the cleanser, adhesives or primers. This optional treatment may include cleaning and degreasing for the second component, plasma coating, coating with another surface treatment (e.g. a primer or a paint), and combinations thereof.

The adhesive used to bond the components together may be any suitable adhesive for the intended application. It may be a water based adhesive, an organic solvent based adhesive or otherwise. It may be a single component adhesive or a multi-component adhesive (e.g., a two-component adhesive). The multi-component adhesive may use the components simultaneously (e.g. an epoxy) or sequentially. It may be air cured, moisture cured, heat cured, radiation cured (e.g., IR or UV), radio frequency cured, solvent loss cured, or otherwise cured. It may be a melt flowable, a liquid, a film, a powder, a paste, a tape, a foam, a gel or otherwise. It may be a pressure sensitive, an RTV adhesive, or a hot-melt adhesive. It may be a structural adhesive in certain applications. It should be recognized that the use of the term adhesive herein is not intended to foreclose primers or other bonding agents from the scope of the present invention.

In another embodiment, the adhesive may be a cure-on-demand adhesive, requiring a separate operation to cause the adhesive to begin to cure. For example, in one embodiment this is achieved by using an encapsulated curing agent that is ruptured during assembly. In another embodiment this is achieved by removing a protective coating to expose the adhesive to ambient conditions. Cure can be initiated by exposing the adhesive to heat, infrared or ultraviolet light sources, or to shearing forces and the like. Of course, it is always possible to employ an adhesive that does not have cure on demand capability.

An adhesive selected from any suitable adhesive family may be employed such as polyesters, polyamides, polyurethanes, polyethers, polyolefins, epoxies, ethylene vinyl acetates, urethanes, (meth) acrylics (including without limitation cyanoacrylate), silanes, silicones, thioethers, fluorosilicones, fluorocarbons, combinations thereof or the like. The adhesive may be a high temperature epoxy resin, a high temperature acrylic resin, a polyimide, a hybrid polyimide/epoxy resin adhesive, an epoxy novolac/nitrile rubber adhesive, a polythioether epoxy or the like. Alternately, adhesives including an organoborane/amine complex and one or more of monomers, oligomers or polymers having olefinic unsaturation may be used, where the complex is disassociated by a compound or through a temperature which causes the complex to disassociate. Exemplary compositions are disclosed in a patent application titled, "Amine Organoborane Complex Polymerization Initiators and Polymerizable Compositions", U.S. Patent No. 6,706,831 and related patents and application.

In one approach to the invention, a high temperature adhesive is employed, particularly one adhesive wherein the primary component is a resin that when cured can withstand exposure to elevated temperatures without decomposing or delaminating from the component. Examples of such resins include (meth)acrylic resins. Preferable adhesives are selected from polyurethanes with preferred polyurethane adhesives that may include a silicon (e.g., siloxane) admixed with the polyurethane or polyurethane-silicon moieties. More preferable polyurethane adhesives include silyl-terminated polyurethanes, and the most preferred adhesives include siloxane grafted to a polyurethane backbone. Preferred polyurethane adhesives include those sold under the tradename BETASEAL^{™} by Dow Chemical and BETASEAL™ 15625 in particular.

Suitable primers for use with this invention are those matched with the adhesive. For example, primers sold under the tradename BETASEAL™ are preferred for use with BETASEAL™ adhesives. Of course, multiple primers may be utilized.

While not wishing to be bound by theory, it is believed that the application of the basic cleanser increases the polarity of the surface of the first component which in turn increases the ability of an adhesive or primer to bond to the first component, especially if the component comprises a plastic (e.g. a RIM plastic). It is also believed that the cleanser improves the wetting characteristics of the surface of the first component (particularly plastic components) which also increases the ability of an adhesive or primer to bond to the component. It is also believed that the cleanser neutralizes any acids present on the surface component surface, such as those that may be introduced by the use of mold release agents. It is also believed that most benefit will be found in the use of the cleanser on plastics made according to a RIM technique in combination with polyurethane adhesives.

The present invention also comprises methods of bonding two components together. The methods including applying the cleanser to a first component and then bonding the first component to the second component. In one embodiment, after the cleanser is applied to the first component, a primer (if used) is applied to the first component. Then an adhesive is applied to the first component, which then is placed in contact with the second component. In the alternative, after the cleanser is applied to the first component, a primer (if used) and an adhesive are applied to the second component, which is then placed in contact with the first component. Various other combinations of steps are also suitable to bond the first component with the second component such as applying the cleanser to both components before the application of the primer (if used) and the adhesive to either or both of the first and second components. Curing times for the adhesives will be determined by the utilized adhesive; preferably, the adhesive is permitted to cure sufficiently so that the article may be handled without damaging the bonded joint. For example, the adhesive is permitted to cure for more than about 1 minute, more than about I hour, more than about 1 day and/or more than about 1 week. The steps comprising the bonding of the two components together may be carried out at the manufacture of the article (e.g. at the OEM for an automobile or at a parts supplier) or as part of an aftermarket replacement or repair of the article (e.g. window replacement).

The present invention also relates to articles manufactured by the disclosed processes of bonding two or more components together. In one embodiment such articles include a coated transparent or translucent vehicle window that is bonded to a window frame that comprises a RIM component. Other articles may include a lens adhesively bonded to a frame, a mirror bonded to a frame, a structural panel adhesively bonded to a frame, a shield bonded to a frame, combinations thereof, or the like. Frames may totally, or only partially, surround the perimeter of any windows, lens, mirrors or otherwise. Once bonded together, the components may form an assembly for use on, in, or as part of a window, shield, lens, or structure and more particularly, an assembly for use in a transportation vehicle, such as an automobile. Within the vehicle, the assembly may include a windshield, a sun roof, a moon roof, a side window, a rear window or the like. Additionally, the bonded components may form a transparent or translucent protective barrier used to protect users from physical, chemical, and biological hazards. In particular, the bonded components may form a shield on a protective helmet or suit, a shield on an industrial machine, a shield, a reaction vessel, or a window into a reaction vessel.

### EXAMPLES

The following examples are provided to more fully illustrate the invention, and are not intended to limit the scope of the claim. Unless otherwise stated, all parts and percentages are by weight.

The cleanser is compared to situations where no cleanser is used and to situations where only a solvent is used. Lap shear adhesion testing is conducted in accordance with the SAE J 1529 test method and the quick knife adhesion testing is conducted in accordance with the SAE J 1720 test method.

For the lap shear test, a RIM component (e.g. plastic substrate manufactured according to a RIM technique) is wiped with a pad having the cleanser or neat isopropanol and then flash dried (e.g. through the use of a wipe to remove cleanser). One or more primers are then applied to the RIM component. An adhesive bead approximately 6.3 mm wide by 8 mm high is applied along the width of the RIM component and approximately 6 mm to 12 mm from the end. A glass window is placed on the adhesive and the sample is allowed to cure at the condition of the 23°C and 50 percent relative humidity for 7 days. After the initial cure, the sample is subjected to lap shear testing or to further weathering conditions.

One type of weathering includes a humidity age. This includes subjecting the sample to an initial cure, followed by weathering at 38°C and 100% relative humidity for 7 days. Another type of weathering includes a heat age. This includes subjecting the sample to an initial cure, followed by weathering at 80°C and 50% relative humidity for 7 days. Another type of weathering is a long term exposure which includes, after an initial cure, subjecting the sample to 2000 hours of exposure in a Weather-O-Meter (WOM) chamber utilizing SAE J1885 conditions. After weathering, the samples were subjected to the lap shear test.

Four different cleanser/primer systems are compared: 1) isopropanol (IPA) and BETASEAL 43532 primer; 2) BETASEAL 43518 and BETASEAL 43520A primers; 3) cleanser and BETASEAL 43538 primer; and 4) cleanser and 43520A primer, where the cleanser was 1.5 wt % KOH in isopropanol (referred to as a base wipe in the results below). Each cleanser/primer system is tested on five different RIM components: 1) RECTICEL LM 161 with 3836 mold release ; 2) RECTICEL LM 161 with 3771 mold release; 3) RECTICEL LM 161 with RIM 8 mold release; 4) RECTICEL LM 30 with 3836 mold release; and 5) RECTICEL LM 30 with RIM 8 mold release. The mold release agents from Chem-Trend are used. A polyurethane adhesive in the form of BETASEAL 15625 is used as the adhesive for all lap shear testing.

The lap shear test is conducted at a pull rate of 1 inch/minute (2.5 cm/min) with an Instron Tester. Four samples of each cleanser/primer are carried out in each set of conditions: 1) initial cure; 2) heat age; 3) humidity age; and 4) 2000 hrs WOM, unless noted. The results of the lap shear testing of the four samples for each adhesive system are averaged and are reported in Tables 1-4.

**Table 1 : Initial cure**

| Primer | IPA/43532 Primer | 43518/43520A Primer | Base Wipe + 43538 Primer | Base Wipe + 43520A Primer |
|---|---|---|---|---|
| LM 161 3836 | 470 psi | 567 psi(3910kPa) | 784 psi(5410kPa) | 471 psi(3250kPa) |
| | (3240kPa) /14CF | /90CF | /100CF, | /40CF |
| LM 161 3771 | 165 psi(1140kPa) | No sample | 692 psi(4770kPa) | 494 psi(3410kPa) |
| | /0CF | | /100CF | /20CF |
| LM 161 RIM 8 | 234 psi(1610 kPa) | 233 psi(1610 kPa) | 837 psi(5770 kPa) | 606 psi(4180 kPa) |
| | /4CF | /18CF | /2@ 100CF, others 95CF | /20CF |
| LM 30 3836 | 205 psi(1410 kPa) | 333 psi(2300 kPa) | No sample | No sample |
| | /0CF | /0CF | | |
| LM 30 RIM 8 | 342 psi(2360 kPa) | 140 psi(965 kPa) /0CF | 634 psi(4370 kPa) | No sample |
| | /49CF | | /100CF | |

**Table 2: Heat Age (initial cure + 7d 80C)**

| Primer | IPA/43532 Primer | 43518/43520A Primer | Base Wipe+ 43538 Primer | Base Wipe+ 43520A Primer |
|---|---|---|---|---|
| LM 161 3836 | 644 psi(4440 kPa) | 558 psi(3850 kPa) | 634 psi(4370 kPa) | 649 psi(4470 kPa) |
| | /67CF | /48CF | /90CF | /10, 20, 30,100CF |
| LM 161 3771 | 199 psi(1370 kPa) | No sample | 356 psi(2450 kPa) | 540 psi(3720 kPa) |
| | /0CF | | /10, 30CF | /40, 60CF |
| LM 161 RIM 8 | 379 psi(2610 kPa) | 554 psi(3820 kPa) | 640 psi(4410 kPa) | 630 psi(4340 kPa) |
| | /42CF | /34CF | /95CF | /3@ 100CF, 1@ 40CF |
| LM 30 3836 | 428 psi(2950 kPa) | 265 psi(1830 kPa) | 453 psi(3120 kPa) | 372 psi(2560 kPa) |
| | /9CF | /0CF | /100CF | /100CF |
| LM 30 RIM 8 | 489 psi(3370 kPa) | 321 psi(2210 kPa) | No sample | No sample |
| | /53CF | /1CF | | |

**Table 3: Humidity age (initial cure + 7d 38/100)**

| Primer | IPA/43532 Primer | 43518/43520A Primer | Base Wipe + 43538 Primer | Base Wipe + 43520A Primer |
|---|---|---|---|---|
| LM 161 3836 | 490 psi(3380 kPa) | 564 psi(3890 kPa) | 720 psi(4960 kPa) | 514 psi(3540 kPa) |
| | /56CF | /74CF | /40, 50, 100CF | /40, 50CF, 2@ 100CF |
| LM 161 3771 | 152 psi(1050 kPa) | No sample | 525 psi(3620 kPa) | 420 psi(2900 kPa) |
| | /5CF | | /20CF, 100CF | /20, 30, 40, 50CF |
| LM 161 RIM 8 | 426 psi(2940 kPa) | 486 psi(3350 kPa) | 727 psi(5010 kPa) | 421 psi(2900 kPa) |
| | /58CF | /4CF | /100CF | /100CF |
| LM 30 3836 | 318 psi(2190 kPa) | 376 psi(2590 kPa) | 479 psi(3300 kPa) | 297 psi(1360 kPa) |
| | /6CF | /0CF | /90CF | /100CF |
| LM 30 RIM 8 | 421 psi(2900 kPa) | 342 psi(2360 kPa) | No sample | No sample |
| | /27CF | /3CF | | |

**Table 4: Initial cure + 2000 hrs WOM**

| Primer | IPA/43532 Primer | 43518/43520A Primer | Base Wipe + 43538 Primer | Base Wipe + 43520A Primer |
|---|---|---|---|---|
| LM 161 3836 | 618 psi(4260 kPa) | 301 psi(2080 kPa) | 625 psi(4310 kPa) | 792 psi(5460 kPa) |
| | /60CF | /19CF* | /100CF | /100CF |
| LM 161 3771 | No sample | No sample | 650 psi(4480 kPa) | 656 psi(4520 kPa) |
| | | | /100CF | /1@100CF, |
| | | | | 2@20CF, |
| | | | | 1@60CF |
| LM 161 RIM 8 | 509 psi(3510 kPa) | 388 psi(2650 kPa) | 724 psi(4990 kPa) | 565 psi(4520 kPa) |
| | /55CF | /10CF* | /100CF | /100CF |
| LM 30 3836 | 263 psi(1810 kPa) | 0 psi (0 kPa) /0CF** | 556 psi(3830 kPa) | 643 psi(4430 kPa) |
| | /0CF** | | /100CF | /20, 30CF |
| LM 30 RIM 8 | 379 psi(2610 kPa) | 0 psi (0 kPa) /0CF** | No sample | No sample |
| | /10CF | | | |

| | | | | |
|---|---|---|---|---|
| * 2 samples fell apart prior to testing ** all samples fell apart prior to testing | | | | |

The tables show the strength of the joint for each comparative example and cleanser/primer combination in psi. The tables also show the degree of adhesion as a percentage of cohesive failure (CF). In CF, separation occurs within the adhesive as a result of pulling. The use of the cleanser showed lap shear strengths that were comparable, if not better, than the lap shear strengths of the uncleaned substrates. Furthermore, the use of the cleanser improved the mode of failure in the form of higher percentages of cohesive failure (as opposed to adhesive failure). In particular, the cleanser/primer combinations exhibit lap shear strength of greater than about 350 psi (2410 kPa), greater than about 500 psi (3450 kPa), greater than about 750 psi (5170 kPa) while also showing at least some degree of cohesive failure, but preferably greater than about 50% CF, more preferably greater than about 75 % CF and most preferably 100% CF.

For the quick knife adhesion testing, a 6.3 mm (width) x 6.3 mm (height) x 100 mm (length) bead of adhesive is placed on a RIM component that had been cleaned using the cleanser and primed. The adhesive is cured under the conditions of 23°C and 50 percent relative humidity for 7 days. The cured bead is then cut with a razor blade through to the substrate at a 45° angle while pulling back the end of the bead at 180° angle. Notches are cut every 3 mm on the substrate. The degree of adhesion is evaluated as a percentage of cohesive failure (CF). In CF, separation occurs within the adhesive as a result of cutting and pulling. The same cleanser/primer/adhesive/RIM component combinations used for the lap shear test were used for the quick knife adhesion testing, as were the same weathering conditions. One sample of each adhesive and weathering conditions were subjected to the quick knife adhesion test. The results are summarized below in Table 5-8.

**Table 5: Initial cure**

| Primer | IPA/43532 Primer | 43518/43520A Primer | Base Wipe + 43538 Primer | Base Wipe + 43520A Primer |
|---|---|---|---|---|
| LM 161 3836 | 40CF | 90CF | 100CF | 100CF |
| LM 161 3771 | OCF | No sample | 100CF | 100CF |
| LM 161 RIM 8 | 10CF | 0CF | 100CF | 100CF |
| LM 30 3836 | No sample | No sample | 100CF | 100CF |
| LM 30 RIM 8 | No sample | No sample | 100CF | 100CF |

**Table 6: Heat Age (initial cure + 7d 80C)**

| Primer | IPA/43532 Primer | 43518/43520A Primer | Base Wipe + 43538 Primer | Base Wipe + 43520A Primer |
|---|---|---|---|---|
| LM 161 3836 | 70CF | 40CF | 100CF | 100CF |
| LM 161 3771 | 70CF | No sample | 100CF | 100CF |
| LM 161 RIM 8 | 25CF | 40CF | 100CF | 100CF |
| LM 30 3836 | No sample | No sample | 100CF | 100CF |
| LM 30 RIM 8 | No sample | No sample | 100CF | 100CF |

**Table 7: Humidity age (initial cure + 7d 38/100)**

| Primer | IPA/43532 Primer | 43518/43520A Primer | Base Wipe + 43538 Primer | Base Wipe + 43520A Primer |
|---|---|---|---|---|
| LM 161 3836 | 95CF | 75CF | 100CF | 100CF |
| LM 161 3771 | 0CF | No sample | 100CF | 100CF |
| LM 161 RIM 8 | 20CF | 0CF | 100CF | 100CF |
| LM 30 3836 | No sample | No sample | 100CF | 100CF |
| LM 30 RIM 8 | No sample | No sample | 100CF | 100CF |

**Table 8: Initial cure + 2000 hrs WOM**

| Primer | IPA/43532 Primer | 43518/43520A Primer | Base Wipe + 43538 Primer | Base Wipe + 43520A Primer |
|---|---|---|---|---|
| LM 161 3836 | 100CF | 100CF | 100CF | 100CF |
| LM 161 3771 | No sample | No sample | 100CF | 100CF |
| LM 161 RIM 8 | 40CF | 40CF | 100CF | 100CF |
| LM 30 3836 | No sample | No sample | 100CF | 100CF |
| LM 30 RIM 8 | No sample | No sample | 100CF | 100CF |

The tables show the type and amount of failure that occurred during the quick knife testing. For example, 100CF means 100% cohesive failure and smear means a failure of the adhesive occurred. The results of the quick knife adhesion testing show that the use of the cleanser improved the degree of cohesive failure regardless of the make up of the RIM component, the mold release or weathering conditions.

Overall, the lap shear strength testing and the quick knife adhesion testing show that the cleanser provides bonds with lap shear strength comparable or better than bonds to uncleaned substrates, while also providing improvements in the percentage of cohesive failure over a wide range of RIM components and mold release agents. Thus, the cleanser is broadly applicable to improve bonding glass to elastomeric thermoplastics, such as those including RIM components.

It will be further appreciated that functions or structures of a plurality of components or steps may be combined into a single component or step, or the functions or structures of one-step or component may be split among plural steps or components. The present invention contemplates all of these combinations. Unless stated otherwise, dimensions and geometries of the various structures depicted herein are not intended to be restrictive of the invention, and other dimensions or geometries are possible. Plural structural components or steps can be provided by a single integrated structure or step. Alternatively, a single integrated structure or step might be divided into separate plural components or steps. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention. The present invention also encompasses intermediate and end products resulting from the practice of the methods herein. The use of "comprising" or "including" also contemplates embodiments that "consist essentially of" or "consist of" the recited feature.

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the invention. The scope of the invention should, therefore, be determined not with reference to the above description, but should instead be determined with reference to the appended claims, along with the full scope of equivalents to which such claims are entitled.

## Claims

1. A method of preparing a substrate for bonding, comprising:
contacting a reaction injection molded article having an external mold release agent thereon with a cleanser that consists essentially of a solution of between 0.5 wt % and 5 wt % of hydroxide in isopropanol and
drying the surface of the reaction injection molded article by removing at least a portion of the cleanser therefrom, wherein the drying step commences within a minute of the completion of the application step.

2. The method of claim 1 wherein contacting step comprises wiping the article with an applicator comprising the cleanser.

3. The method of claim 1 wherein the drying step comprises wiping the article with an applicator.

4. The method of claim 3 further comprising applying a primer to the cleaned surface.

5. The method of claim 4 wherein the reaction injection molded article comprises polyurethane.

6. A method of bonding two substrates, comprising:
cleaning a surface of a first substrate with a basic solution consisting essentially of at least one hydroxide and at least one alcohol, wherein the first substrate is a reaction injection molded component comprising a mold release agent;
applying a primer to the cleaned surface or to a second substrate, wherein the second substrate comprises a transparent glass panel;
joining the first substrate and the second substrate with an adhesive.

7. The method of claim 6 wherein the cleaning step comprises wiping the surface with an applicator comprising the basic solution and comprises drying the surface by wiping the surface with an applicator.

8. The method of claim 7 wherein the basic solution consists essentially of 1.5 wt % potassium hydroxide in isopropanol.

9. The method of claim 8 wherein the reaction injection molded component is a reaction product of at least one isocyanate prepolymer and at least one polyol ether or amine ether.

10. The method of claim 9 wherein the reaction injection molded component comprises a polyurethane or polyurea.

11. The method of claim 10 wherein the adhesive comprises polyurethane.

12. The method of any one of claims 6 to 11, wherein the basic solution contains less than 10.0 percent by weight of at least one hydroxide in at least one alcohol.

13. The method ofany one of claims 6 to 12, wherein the basic solution contains from 0.5 to 5.0 percent by weight of at least one hydroxide in at least one alcohol.

## Patentansprüche

1. Verfahren zur Herstellung eines Substrats zum Verkleben, mit den folgenden Schritten:
Inkontaktbringen eines reaktionsspritzgegossenen Gegenstands, auf dem sich außen ein Entformungsmittel befindet, mit einem Reiniger, der im Wesentlichen aus einer Lösung von zwischen 0,5 Gew.-% und 5 Gew.-% Hydroxid in Isopropanol befindet, und
Trocknen der Oberfläche des reaktionsspritzgegossenen Gegenstands, indem wenigstens ein Teil des Reinigers davon entfernt wird, wobei der Trocknungsschritt innerhalb einer Minute nach Beendigung das Auftragens beginnt.

2. Verfahren nach Anspruch 1, wobei der Schritt des Inkontaktbringens das Abwischen des Gegenstands mit einem den Reiniger umfassenden Applikator umfasst.

3. Verfahren nach Anspruch 1, wobei der Schritt des Trocknens das Abwischen des Gegenstands mit einem Applikator umfasst.

4. Verfahren nach Anspruch 3, bei dem ferner eine Grundierung auf die gereinigte Oberfläche aufgebracht wird.

5. Verfahren nach Anspruch 4, wobei der reaktionsspritzgegossene Gegenstand Polyurethan umfasst.

6. Verfahren zum Verkleben von zwei Substraten, mit den folgenden Schritten:
Reinigen einer Oberfläche eines ersten Substrats mit einer basischen Lösung, die im Wesentlichen aus mindestens einem Hydroxid und mindestens einem Alkohol besteht, wobei das erste Substrat ein reaktionsspritzgegossenes Bauteil ist, das ein Entformungsmittel umfasst;
Auftragen einer Grundierung auf die gereinigte Oberfläche oder auf ein zweites Substrat, wobei das zweite Substrat eine transparente Glasscheibe umfasst;
Zusammenfügen des ersten Substrats und des zweiten Substrats mit Hilfe eines Klebstoffs.

7. Verfahren nach Anspruch 6, wobei der Schritt des Reinigens das Abwischen der Oberfläche mit einem die basische Lösung umfassenden Applikator umfasst und das Trocknen der Oberfläche durch Abwischen der Oberfläche mit einem Applikator umfasst.

8. Verfahren nach Anspruch 7, wobei die basische Lösung im Wesentlichen aus 1,5 Gew.-% Kaliumhydroxid in Isopropanol besteht.

9. Verfahren nach Anspruch 8, wobei das reaktionsspritzgegossene Bauteil ein Reaktionsprodukt von mindestens einem Isocyanatvorpolymer und mindestens einem Polyolether oder Aminether ist.

10. Verfahren nach Anspruch 9, wobei das reaktionsspritzgegossene Bauteil ein Polyurethan oder einen Polyharnstoff umfasst.

11. Verfahren nach Anspruch 10, wobei der Klebstoff Polyurethan umfasst.

12. Verfahren nach einem der Ansprüche 6 bis 11, wobei die basische Lösung weniger als 10,0 Gew.-% mindestens eines Hydroxids in mindestens einem Alkohol enthält.

13. Verfahren nach einem der Ansprüche 6 bis 12, wobei die basische Lösung von 0,5 bis 5,0 Gew.-% mindestens eines Hydroxids in mindestens einem Alkohol enthält.

## Revendications

1. Procédé de préparation d'un substrat en vue d'un collage, lequel procédé comporte les étapes suivantes :
- mettre un article, moulé par injection-réaction et portant sur lui un agent de démoulage extérieur, en contact avec un agent de nettoyage consistant essentiellement en une solution qui contient de 0,5 à 5 % en poids d'hydroxyde dans de l'isopropanol,
- et sécher la surface de l'article moulé par injection-réaction, en enlevant de là au moins une partie de l'agent de nettoyage,
et dans lequel procédé l'étape de séchage commence dans la minute suivant l'achèvement de l'étape d'application.

2. Procédé conforme à la revendication 1, dans lequel l'étape de mise en contact comporte le fait de passer sur l'article un applicateur contenant l'agent de nettoyage.

3. Procédé conforme à la revendication 1, dans lequel l'étape de séchage comporte le fait d'essuyer l'article avec un applicateur.

4. Procédé conforme à la revendication 3, qui comporte en outre le fait d'appliquer un primaire sur la surface nettoyée.

5. Procédé conforme à la revendication 4, dans lequel l'article moulé par injection-réaction comprend un polyuréthane.

6. Procédé de collage de deux substrats, qui comporte les étapes suivantes :
- nettoyer une surface d'un premier substrat à l'aide d'une solution basique consistant essentiellement en au moins un hydroxyde et au moins un alcool, lequel premier substrat est un composant moulé par injection-réaction qui comprend un agent de démoulage ;
- appliquer un primaire sur la surface nettoyée ou sur un deuxième substrat, lequel deuxième substrat comprend un panneau de verre transparent ;
- et joindre avec un adhésif le premier substrat et le deuxième substrat.

7. Procédé conforme à la revendication 6, dans lequel l'étape de nettoyage comporte le fait de passer sur la surface un applicateur contenant la solution basique, et comporte le fait de sécher la surface en l'essuyant avec un applicateur.

8. Procédé conforme à la revendication 7, dans lequel la solution basique consiste essentiellement en de l'isopropanol contenant 1,5 % en poids d'hydroxyde de potassium.

9. Procédé conforme à la revendication 8, dans lequel le composant moulé par injection-réaction est un produit de réaction d'au moins un prépolymère isocyanate et d'au moins un éther-polyol ou éther-amine.

10. Procédé conforme à la revendication 9, dans lequel le composant moulé par injection-réaction comprend un polyuréthane ou une polyurée.

11. Procédé conforme à la revendication 10, dans lequel l'adhésif comprend un polyuréthane.

12. Procédé conforme à l'une des revendications 6 à 11, dans lequel la solution basique contient moins de 10,0 % en poids d'au moins un hydroxyde dans au moins un alcool.

13. Procédé conforme à l'une des revendications 6 à 12, dans lequel la solution basique contient de 0,5 à 5,0 % en poids d'au moins un hydroxyde dans au moins un alcool.
